# EUROPÄISCHE PATENTSCHRIFT

(11) **EP 2 468 822 B1**
(45) Veröffentlichungstag und Bekanntmachung des Hinweises auf die Patenterteilung: **10.06.2015**
(21) Anmeldenummer: 10196679.4
(22) Anmeldetag: 22.12.2010
(51) Int. Cl.: C09B 33/22, C09D 11/00

(54) **Schwarze Trisazofarbstoffe, ihre Herstellung und Verwendung**
Black trisazo dyes, their preparation and their use
Colorants noirs triazoïques, leur préparation et leur utilisation

(43) Veröffentlichungstag der Anmeldung: 27.06.2012
(60) Teilanmeldung: 14001577.7
(73) Patentinhaber: Rex-Tone Industries Ltd, Mumbai - 400 064 (IN)
(72) Erfinder: Baettig, Kurt, 1724 Le Mouret (CH); Moigno, Damien, 1723 Marly (CH)
(74) Vertreter: BOVARD AG

(56) Entgegenhaltungen:
- EP-A1- 1 693 422
- EP-A1- 1 777 273
- US-A- 2 220 396

## Beschreibung

### Technisches Gebiet

Die Erfindung bezieht sich auf neue schwarze Trisazofarbstoffe und ihre Salze, ein Verfahren zu ihrer Herstellung, ihren Einsatz in Färbe- und Druckverfahren sowie auf Farbstoffpräparationen, die diese Trisazofarbstoffe enthalten, insbesondere wässrige Tinten für den Tintenstrahldruck und Schreibutensilien.

### Stand der Technik

Tintenstrahldrucker der neusten Generation müssen aus wirtschaftlichen Gründen immer schneller drucken können. Angepasste Aufzeichnungsmaterialen für solche Drucker enthalten nanoporöse anorganische Verbindungen, beispielsweise Siliziumdioxid, Aluminiumoxid/hydroxid, Aluminiumoxid oder deren Gemische, mit einer modifizierten Oberfläche. Solche Aufzeichnungsmaterialien sind unter dem Begriff "nanoporöse Aufzeichnungsmaterialen" bekannt. Auf diese Aufzeichnungsmaterialien gedruckte Bilder müssen eine gute Haltbarkeit auch unter ungünstigen Bedingungen aufweisen, was nur möglich ist mit einem fein abgestimmten System von Tinten (beziehungsweise den darin enthaltenen Farbstoffen).

Bis jetzt können diese Bilder nicht alle an sie gestellten Anforderungen erfüllen, insbesondere lässt häufig die Wasserfestigkeit, die Lichtbeständigkeit, die Ozonbeständigkeit, der Farbton und die Brillanz der auf diesen Materialien hergestellten Bilder zu wünschen übrig. Es werden deshalb Farbstoffe gesucht, welche die obigen Eigenschaften, besonders in schwarzen Farbtönen, der auf diesen Materialien hergestellten Bilder verbessern.

Obwohl schon eine ganze Anzahl verschiedener schwarzer Farbstoffe zur Verwendung im Tintenstrahldruck vorgeschlagen worden sind, vermag noch keiner alle an ihn gestellten Anforderungen zu erfüllen.

Der Trisazofarbstoff der Formel (I) 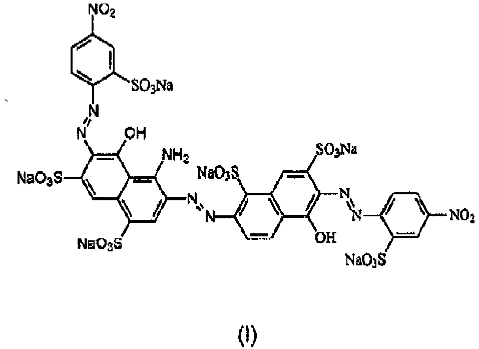 wird in der Patentanmeldung WO 2005/054 374 (Beispiel Nr. 5) beschrieben.

Der Trisazofarbstoff der Formel (II) 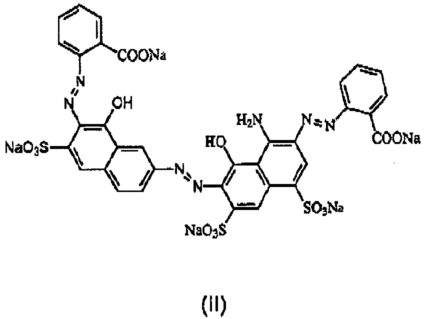 wird in der Patentanmeldung US 6,632,932 B1 (Beispiel Nr. 14) beschrieben.

Der Trisazofarbstoff der Formel (III) 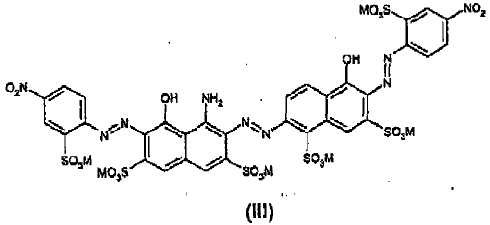 wird in der Patentanmeldung JP 2005/220211 (Beispiel Nr. 1) beschrieben.

Diese Trisazofarbstoffe des Standes der Technik vermögen in der Praxis im Tintenstrahldruck nicht alle an sie gestellten Anforderungen zu erfüllen, wenn es darum geht, mit ihnen Tinten herzustellen, die auch auf schnelltrocknenden, nanoporösen Aufzeichnungsmaterialien Bilder mit einer guten Haltbarkeit auch unter ungünstigen Bedingungen ergeben. Natürlich müssen sie auch auf allen anderen möglichen Aufzeichnungsmaterialien wie unbeschichtetem oder beschichtetem Papier, beschichtetem oder unbeschichtetem, opaken oder durchsichtigem Kunststoffträger schwarze Bildstellen oder Färbungen mit möglichst neutralem Farbton (L*a*b*-Werte mit möglichst kleinen a*- und b*-Werten) ergeben.
Farbstoffe für solche Tinten müssen eine gute Löslichkeit in der mehrheitlich wässrigen Tintenflüssigkeit aufweisen, sie müssen ins Aufnahmematerial eindringen und dürfen keine Aggregation an der Oberfläche des Aufnahmematerials zeigen ("Bronzing"). Sie müssen Bilder mit einer hohen optischen Dichte, einer guten Wasserfestigkeit, einer guten Lichtbeständigkeit, einer guten Ozonbeständigkeit und einer guten Diffusionsfestheit auch unter ungünstigen Bedingungen ergeben. Sie müssen in der Tinte stabil sein, auch wenn diese lange Zeit unter ungünstigen Bedingungen gelagert wird.

Verschiedene Zusammensetzungen für Tinten sind vorgeschlagen worden. Typische Tinten enthalten einen oder mehrere Farbstoffe oder Pigmente, Wasser, organische Hilfslösungsmittel und andere Zusätze.

Die Tinten müssen die folgenden Anforderungen erfüllen:
(1) Die Tinte ergibt Bilder hochstehender Qualität auf allen möglichen Aufnahmematerialien.
(2) Die Tinte ergibt Bilder mit guter Wasserfestigkeit.
(3) Die Tinte ergibt Bilder mit guter Lichtbeständigkeit.
(4) Die Tinte ergibt Bilder mit guter Ozonbeständigkeit.
(5) Die Tinte ergibt Bilder mit hervorragender Abriebfestigkeit.
(6) Die Tinte ergibt Bilder mit hervorragender Lagerbeständigkeit bei hoher Temperatur und Feuchtigkeit.
(7) Die Tinte verstopft die Tintenstrahldruckerdüsen nicht, auch wenn diese längere Zeit während Druckpausen nicht abgedeckt sind.
(8) Die Tinte kann lange Zeit gelagert werden, ohne dass ihre Qualität abnimmt.
(9) Die Tinte muss ungiftig, unbrennbar und unschädlich sein.

### Beschreibung der Erfindung

Ziel der Erfindung ist die Bereitstellung neuer schwarzer Trisazofarbstoffe mit schwarzem, möglichst neutralem Farbton und deren Verwendung in wässrigen Tinten, insbesondere im Tintenstrahldruck und in Schreibutensilien. Im Tintenstrahldruck sind sie besonders vorteilhaft zur Erzeugung von Bilder oder Färbungen auf schnelltrocknenden, nanoporösen Aufzeichnungsmaterialien. Diese neuen, farbstarken schwarzen Trisazofarbstoffe haben eine hohe Löslichkeit in wässrigen Formulierungen, ergeben Bilder oder Färbungen mit allgemein guten Eigenschaften, insbesondere im Tintenstrahldruck, wo sie Bilder mit brillantem Farbton ergeben, die auch bei längerer Lagerung bei hoher Temperatur und Feuchtigkeit nicht oder höchstens in unbedeutendem Ausmass unscharf werden und ebenso lichtecht und ozonbeständig sind.
Ein weiteres Ziel der Erfindung ist die Bereitstellung von flüssigen Farbstoffpräparationen, insbesondere von Tinten für den Tintenstrahldruck und für Schreibutensilien, die auf allen möglichen Aufnahmematerialien einen spektral unveränderten Farbtone ergeben.
Ein weiteres Ziel der Erfindung ist die Bereitstellung von Tinten, die alle vorhin erwähnten Anforderungen erfüllen.

Die vorliegende Erfindung bezieht sich auf neue Trisazofarbstoffe der allgemeinen Formel (IV) 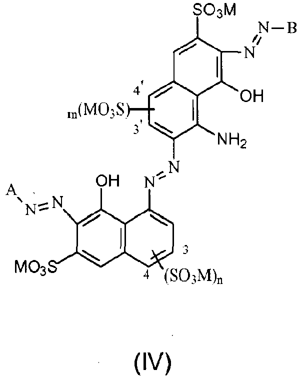 und der allgemeinen Formel (V) 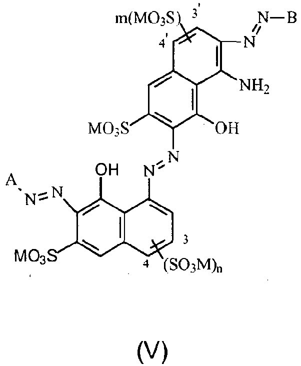 worin
- M: für ein Wasserstoffatom, ein Metallkation oder ein Ammoniumkation, welches gegebenenfalls eine oder mehrere unsubstituierte oder substituierte Alkylreste oder Hydroxyalkoxylalkylreste mit jeweils 1 bis 18 Kohlenstoffatomen aufweist, steht;
- m, n: unabhängig voneinander den Wert 0 oder 1 annehmen;
- A: entweder für einen Rest der allgemeinen Formel (VI) 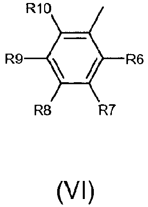 worin
R₆, R₇, R₈, R₉, R₁₀ unabhängig voneinander für ein Wasserstoffatom, eine SO₃M-Gruppe, eine NO₂-Gruppe eine COOM-Gruppe, eine CN-Gruppe, ein Halogenatom, einen Esterrest, einen Alkylrest oder Alkoxylrest mit je 1 bis 6 Kohlenstoffatomen, für einen unsubstituierten oder substituierten Amidrest oder Sulfonamidrest mit je bis zu 12 Kohlenstoffatomen, wobei die Substituenten aus der Gruppe bestehend aus COOM, OH, OCH₃, NH₂, Cl, COOCH₃ und COOCH₂CH₃ ausgewählt werden, stehen;
oder für einen Rest der allgemeinen Formel (VII) 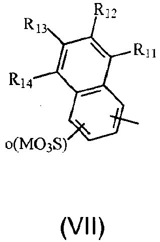 worin
o den Wert 0 oder 1 annimmt
und
R₁₁, R₁₂, R₁₃, R₁₄ unabhängig voneinander für ein Wasserstoffatom, eine SO₃M-Gruppe, eine NO₂-Gruppe eine COOM-Gruppe, ein Halogenatom, einen Esterrest, einen Alkoxylrest mit 1 bis 6 Kohlenstoffatomen, für einen unsubstituierten oder substituierten Amidrest oder Sulfonamid-Rest mit je bis zu 12 Kohlenstoffatomen, wobei die Substituenten aus der Gruppe bestehend aus COOM, OH, OCH₃, NH₂, Cl, COOCH₃ und COOCH₂CH₃ ausgewählt werden, stehen
und
- B: entweder für einen Rest der allgemeinen Formel (VIII) 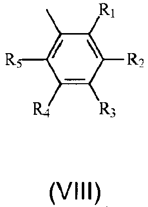 worin
R₁, R₂, R₃, R₄, R₅ unabhängig voneinander für ein Wasserstoffatom, eine SO₃M-Gruppe, eine NO₂-Gruppe eine COOM-Gruppe, eine CN-Gruppe, ein Halogenatom, einen Esterrest, einen Alkylrest oder Alkoxylrest mit je 1 bis 6 Kohlenstoffatomen, für einen unsubstituierten oder substituierten Amidrest oder Sulfonamidrest mit je bis zu 12 Kohlenstoffatomen, wobei die Substituenten aus der Gruppe bestehend aus COOM, OH, OCH₃, NH₂, Cl, COOCH₃ und COOCH₂CH₃ ausgewählt werden, stehen; oder für einen Rest der allgemeinen Formel (IX) 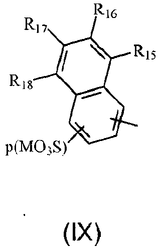 worin
p den Wert 0 oder 1 annimmt
und
R₁₅, R₁₆, R₁₇, R₁₈ unabhängig voneinander für ein Wasserstoffatom, eine SO₃M-Gruppe, eine NO₂-Gruppe eine COOM-Gruppe, ein Halogenatom, einen Esterrest, einen Alkoxylrest mit 1 bis 6 Kohlenstoffatomen, für einen unsubstituierten oder substituierten Amidrest oder Sulfonamid-Rest mit je bis zu 12 Kohlenstoffatomen, wobei die Substituenten aus der Gruppe bestehend aus COOM, OH, OCH₃, NH₂, Cl, COOCH₃ und COOCH₂CH₃ ausgewählt werden, stehen.

Bevorzugt sind Trisazofarbstoffe der allgemeinen Formeln (IV) und (V), bei denen M, o und p die gleiche Bedeutung wie vorhin angegeben haben,
- R₁, R₂, R₃, R₄, R₅: unabhängig voneinander für ein Wasserstoffatom, eine SO₃M-Gruppe, eine NO₂-Gruppe eine COOM-Gruppe, eine CN-Gruppe, ein Halogenatom, einen Esterrest, einen Alkylrest oder Alkoxylrest mit je 1 bis 6 Kohlenstoffatomen stehen;
- R₆, R₇, R₈, R₉, R₁₀: unabhängig voneinander für ein Wasserstoffatom, eine SO₃M-Gruppe eine NO₂-Gruppe eine COOM-Gruppe, eine CN-Gruppe, ein Halogenatom, einen Esterrest, einen Alkylrest oder Alkoxylrest mit je 1 bis 6 Kohlenstoffatomen stehen;
- R₁₁, R₁₂, R₁₃, R₁₄: unabhängig voneinander für ein Wasserstoffatom, ein Halogenatom, eine SO₃M-Gruppe oder eine COOM-Gruppe stehen;
- R₁₅, R₁₆, R₁₇, R₁₈: unabhängig voneinander für ein Wasserstoffatom, ein Halogenatom, eine SO₃M-Gruppe oder eine COOM-Gruppe stehen
und
- m, n: je den Wert 1 annehmen.

Besonders bevorzugt sind Trisazofarbstoffe der allgemeinen Formeln (IV) und (V), bei denen R₁, R₂, R₃, R₄, R₅, R₆, R₇, R₈, R₉, R₁₀, R₁₁, R₁₂, R₁₃, R₁₄, R₁₅, R₁₆, R₁₇, R₁₈, M, o und p die gleiche Bedeutung wie vorhin angegeben haben und
die Sulfonsäuregruppen in den Positionen 4 und 4' stehen.

Besonders bevorzugt sind Trisazofarbstoffe der allgemeinen Formeln (IV) und (V), in denen A ein Rest der allgemeinen Formel (VI) ist und B ein Rest der allgemeinen Formel (VIII).

Ebenfalls bevorzugt sind Trisazofarbstoffe der allgemeinen Formeln (IV) und (V), in denen die Substituenten A und B identisch sind.

Bevorzugt werden als Metallkationen die Kationen der Alkalimetalle (Li, Na, K, Rb, Cs), der Erdalkalimetalle (Mg, Ca, Sr, Ba) und das Ammoniumkation, das gegebenenfalls einen oder mehrere Alkylreste mit je 1 bis 4 Kohlenstoffatomen oder mit einer Hydroxylgruppe substituierte Alkylreste mit jeweils 1 bis 6 Kohlenstoffatomen aufweist.

Spezifische Beispiele von Trisazofarbstoffen der allgemeinen Formel (IV) sind die folgenden, wobei der Substituent M in Tabelle 1 spezifiziert wird.

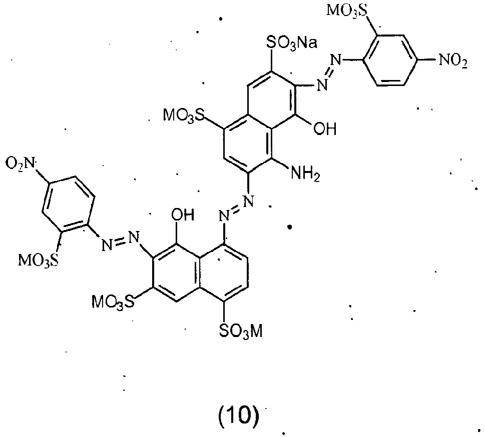

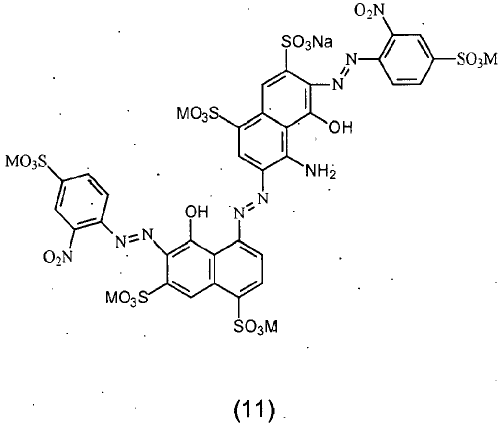

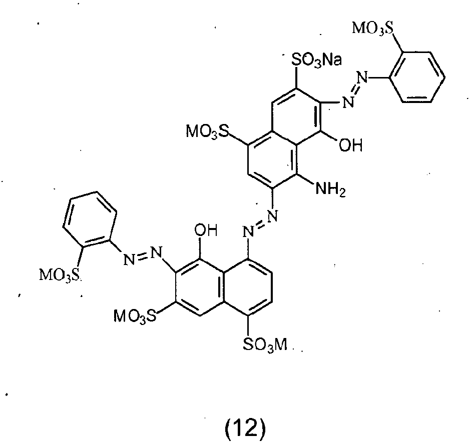

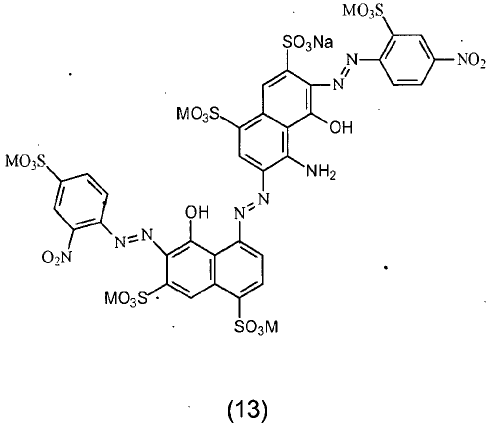

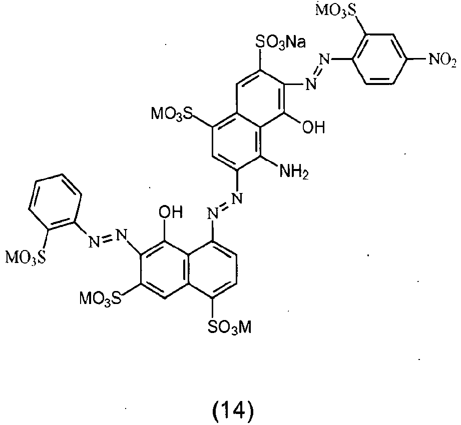

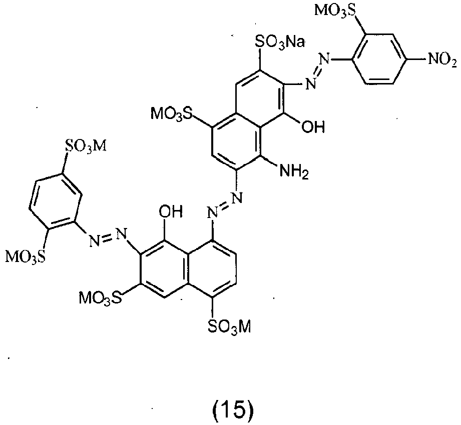

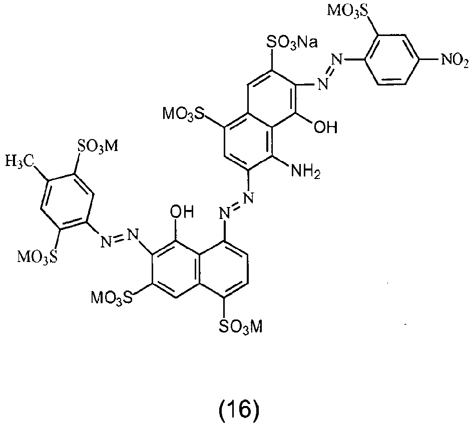

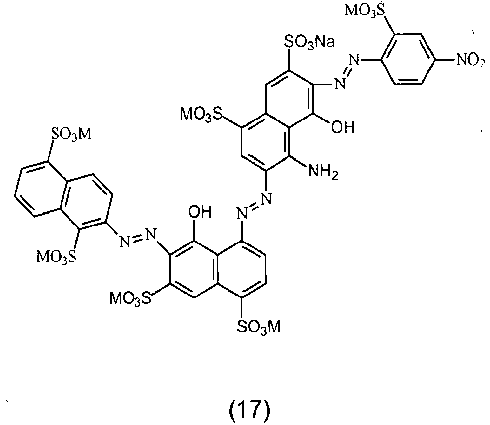

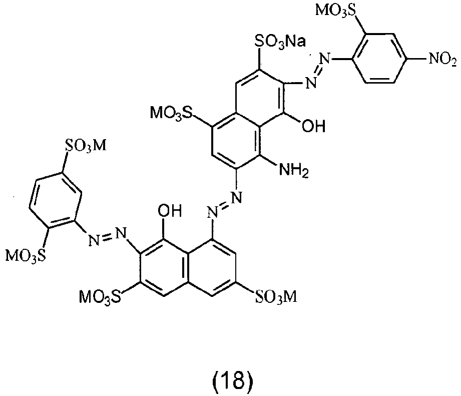

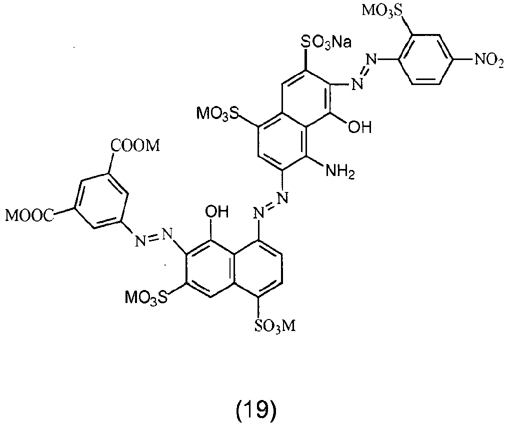

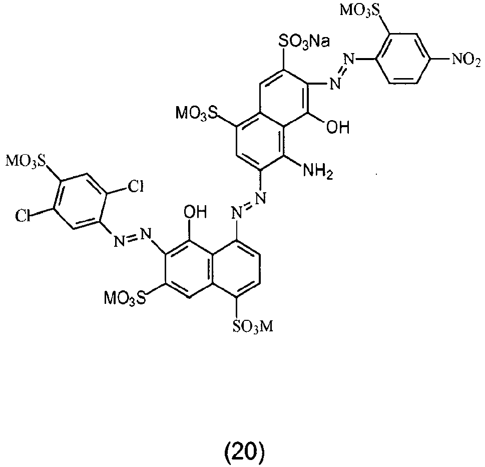

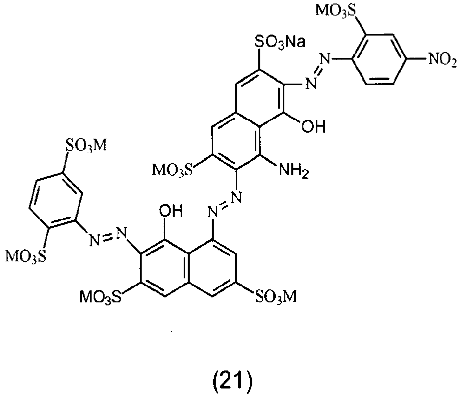

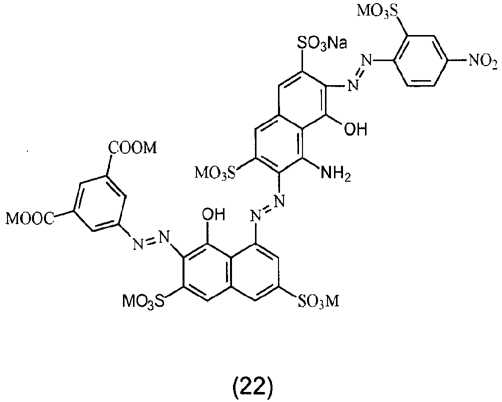

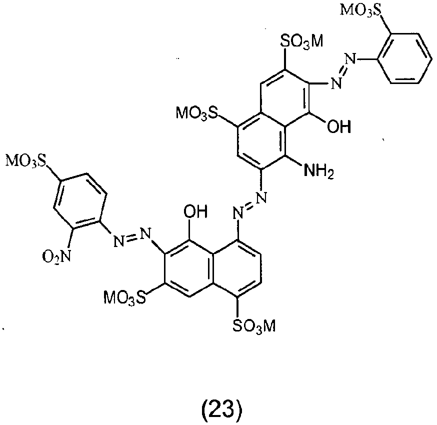

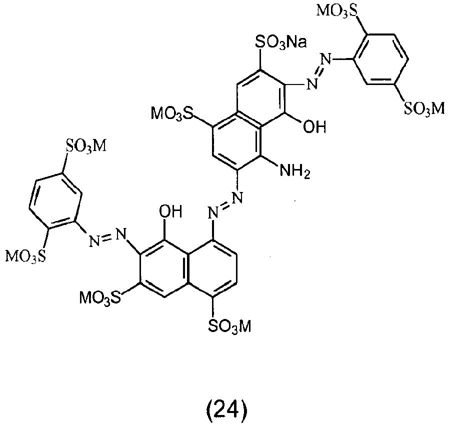

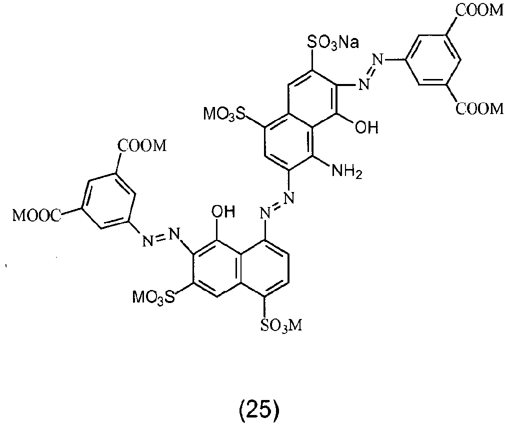

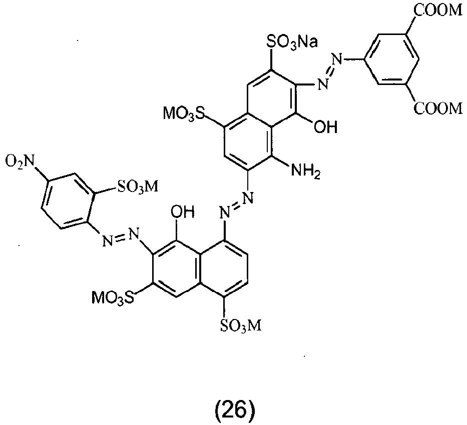

Spezifische Beispiele von Trisazofarbstoffen der allgemeinen Formel (IV) sind die folgenden, wobei der Substituent M in Tabelle 1 spezifiziert wird.

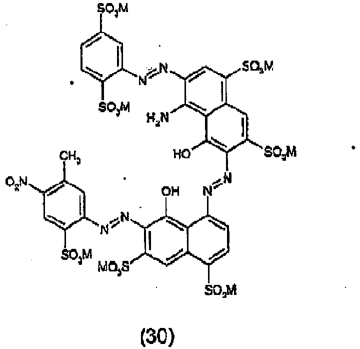

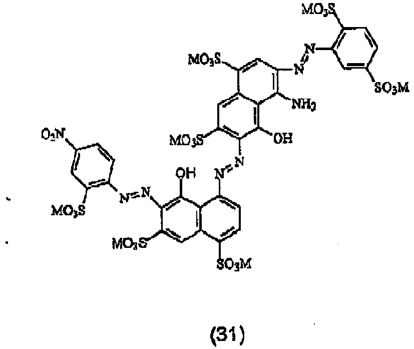

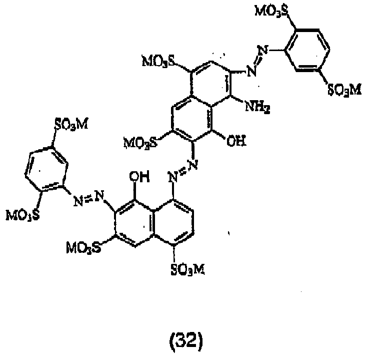

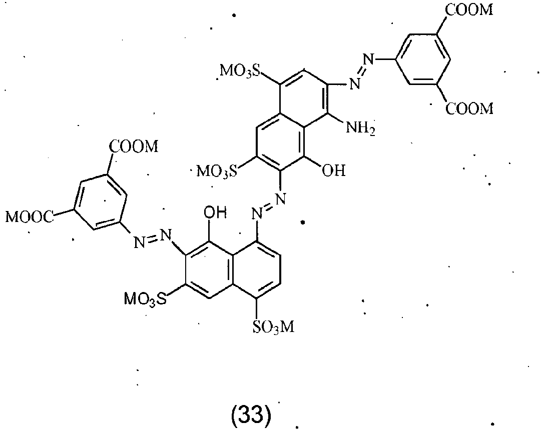

Die hergestellten Trisazofarbstoffe der allgemeinen Formel (IV) und (V) sind zusammen mit ihrem Absorptionsmaximum in wässriger Lösung in Tabelle 1 zusammengestellt:

**Tabelle 1**

| Farbstoff Nr. | M | λₘₐₓ in H₂O (nm) |
|---|---|---|
| 10 | Na | 499 |
| 11 | Na | 501 |
| 12 | Na | 502 |
| 13 | K | 507 |
| 14 | Li | 505 |
| 15 | Na | 497 |
| 16 | Na | 509 |
| 17 | Na | 509 |
| 18 | Na | 508 |
| 19 | Na | 595 |
| 20 | Na | 507 |
| 21 | Na | 511 |
| 22 | Na | 500 |
| 23 | Na | 500 |
| 30 | Na | 509 |
| 31 | Na | 514 |
| 32 | Na | 501 |
| 33 | K | 498 |

Die Trisazofarbstoffe der allgemeinen Formeln (IV) und (V) können als freie Säuren oder als anorganische oder organische Salze dieser Säuren vorliegen. Vorzugsweise liegen sie in Form ihrer Alkali- oder Ammoniumsalze vor, wobei das Ammoniumkation substituiert sein kann. Beispiele solcher substituierter Ammoniumkationen sind 2-Hydroxyethylammonium, Bis-(2-hydroxyethyl)-ammonium, Tris-(2-hydroxyethyl)-ammonium, Bis-(2-hydroxyethyl)-methyl-ammonium, Tris-[2-(2-methoxyethoxy)-ethyl]-ammonium, 8-Hydroxy-3,6-dioxaoctylammonium und Tetraalkylammonium wie beispielsweise Tetramethylammonium oder Tetrabutylammonium.

Weiter betrifft die Erfindung nicht nur reine Trisazofarbstoffe der allgemeinen Formeln (IV) und (V), sondern auch Gemische dieser Trisazofarbstoffe.

Die Erfindung betrifft weiterhin ein Verfahren zur Herstellung der erfindungsgemässen Trisazofarbstoffe der Formel (IV), das dadurch gekennzeichnet ist, dass
ein Amin der allgemeinen Formel (X) 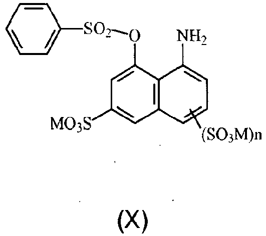 worin n und M die gleiche Bedeutung wie vorher angegeben haben, diazotiert und anschliessend mit einer Verbindung der allgemeinen Formel (XI), 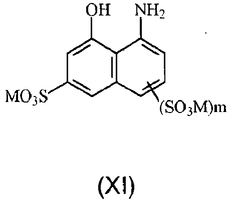 worin m und M die gleiche Bedeutung wie vorher angegeben haben,
bei einem sauren pH-Wert zwischen etwa 1.0 und 3.0 gekuppelt wird, dass der intermediäre Farbstoff der allgemeinen Formel (XII) gebildet wird.

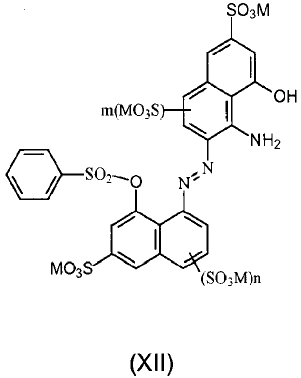

Der intermediäre Farbstoff der allgemeinen Formel (XII) wird weiter mit einer Diazoverbindung der allgemeinen Formel (XIII) 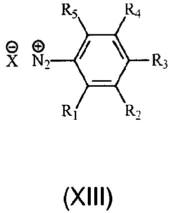 worin R₁, R₂, R₃, R₄ und R₅ die gleiche Bedeutung wie vorher angegeben haben und X das Anion der bei der Diazotierung verwendeten Säure ist,
oder der allgemeinen Formel (XIV) 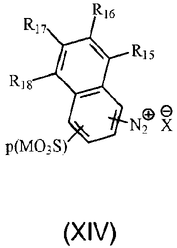 worin R₁₅, R₁₆, R₁₇, R₁₈ und p die gleiche Bedeutung wie vorher angegeben haben und X das Anion der bei der Diazotierung verwendeten Säure ist,
bei einem leicht basischen pH-Wert zwischen etwa 7.0 und 9.0 gekuppelt und anschliessend basisch hydrolisiert wird,
so dass die intermediären Farbstoffe der allgemeinen Formel (XV) 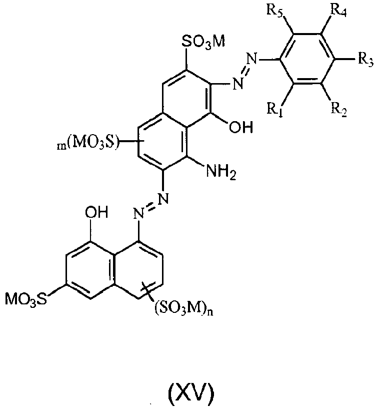 oder der allgemeinen Formel (XVI) 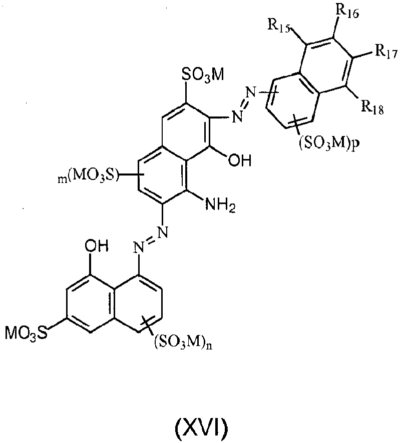 gebildet werden.

Diese intermediären Farbstoff der allgemeinen Formeln (XV) und (XVI) werden weiter mit einer Diazoverbindung der allgemeinen Formel (XVII) 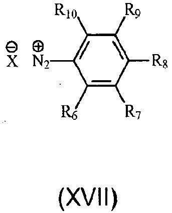 worin X, R₆, R₇, R₈, Rg und R₁₀ die gleiche Bedeutung wie vorher angegeben haben,
oder der allgemeinen Formel (XVIII) 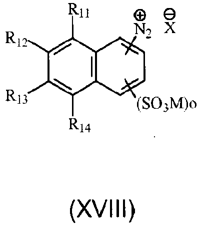 worin X, o, R₁₁, R₁₂, R₁₃ und R₁₄ die gleiche Bedeutung wie vorher angegeben haben,
bei einem etwa neutralen pH-Wert zwischen etwa 5.0 und 9.0 gekuppelt wird, so dass die erfindungsgemässen Farbstoffe der allgemeinen Formel (IV) gebildet werden.

Die Erfindung betrifft weiterhin ein Verfahren zur Herstellung der erfindungsgemässen Trisazofarbstoffe der allgemeinen Formel (V), das dadurch gekennzeichnet ist, dass
ein Amin der allgemeinen Formel (XIX) 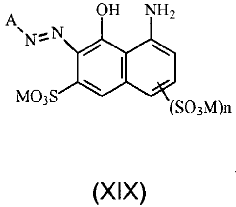 worin M, A und n die gleiche Bedeutung wie vorher angegeben haben, diazotiert und anschliessend mit einer Verbindung der allgemeinen Formel (XX) 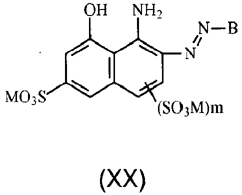 worin M, B und m die gleiche Bedeutung wie vorher angegeben haben,
bei einem leicht basischen pH-Wert zwischen etwa 7.0 und 9.0 gekuppelt wird, so dass die erfindungsgemässen Trisazofarbstoffe der allgemeinen Formel (V) gebildet werden.

Die erfindungsgemässen Trisazofarbstoffe der allgemeinen Formeln (IV) und (V) färben cellulosehaltige Materialien, Papier, Baumwolle und Viskose sowie Leder und Wolle mit guten Nass- und Lichtechtheiten.
Die Trisazofarbstoffe können nach allen in der Papier- und Textilindustrie für Substantivfarbstoffe gebräuchlichen Verfahren verwendet werden, insbesondere in der Massen- wie in der Oberflächenbehandlung von Papier für geleimte oder ungeleimte Sorten. Sie können auch in der Garn- und Stückfärberei von Baumwolle, Viskose und Leinen nach dem Ausziehverfahren oder im kontinuierlichen Verfahren angewandt werden.

Die erfindungsgemässen Trisazofarbstoffe sind besonders geeignet zum Aufzeichnen von Schrift und Bildern auf einem Aufzeichnungsmaterial, beschichtetem oder unbeschichtetem Papier, zum Färben und Bedrucken von natürlichen oder synthetischen Fasermaterialen, nanoporösen Aufzeichnungsmaterialien, Leder und Aluminium.

Die Erfindung betrifft weiter flüssige Farbstoffpräparationen, die mindestens einen Trisazofarbstoff der allgemeinen Formeln (IV) oder (V) enthalten. Diese Anwendungsform ist insbesondere beim Färben von Papier bevorzugt. Die Herstellung von stabilen, flüssigen, vorzugsweise wässrigen, konzentrierten Färbepräparaten kann auf allgemein bekannte Weise erfolgen, vorteilhaft durch Lösen in geeigneten Lösungsmitteln. Von besonderem Vorteil ist die Herstellungsmöglichkeit solcher stabilen, wässrig-konzentrierten Präparationen im Zuge der Farbstoffsynthese selbst ohne Zwischenisolierung des Farbstoffs, beispielsweise nach einer Entsalzung der Reaktionslösung durch Diafiltration.

Trisazofarbstoffe oder Mischungen von Trisazofarbstoffen der allgemeinen Formeln (IV) und (V) sind ausgezeichnete Farbstoffe zur Herstellung von Tinten für den Tintenstrahldruck und für Schreibutensilien.

Die erfindungsgemässen schwarzen Trisazofarbstoffe der allgemeinen Formeln (IV) und (V) sind gut mit anderen Nuancierfarbstoffen, insbesondere solchen, wie sie beispielsweise in den Patentanmeldungen EP 0'755'984, EP 1'219'682, WO 96/24'635 und WO 96/24'636 beschrieben worden sind, kombinierbar, um einen noch neutraleren schwarzen Farbton zu erhalten.

Eine solche Tinte enthält eine oder mehrere der erfindungsgemässen Trisazofarbstoffe in einem flüssigen wässrigen Lösungsmittel. Die Tinte enthält 0.5 bis 20 Gewichtsprozent, vorzugsweise 0.5 bis 8 Gewichtsprozent dieser Trisazofarbstoffe, bezogen auf das Gesamtgewicht der Tinte. Das flüssige Lösungsmittel besteht vorzugsweise aus Wasser oder aus einer Mischung von Wasser und mit Wasser mischbaren organischen Lösungsmitteln. Geeignete Lösungsmittel sind beispielsweise im Patent US 4'626'284 und den Patentanmeldungen GB 2'289'473, EP 0'176'195, EP 0'415'581, EP 0'425'150 und EP 0'597'672 beschrieben worden. Die vorliegende Erfindung wird durch die folgenden Beispiele näher beschrieben, ohne dass dadurch die beanspruchten Verbindungen in irgendeiner Weise eingeschränkt werden.

### Beispiele

### Beispiel 1

Der Trisazofarbstoff Nr. 10 wurde folgendermassen hergestellt:

### Farbstoff-Diazokomponente:

Die Verbindung der Formel (XXI) 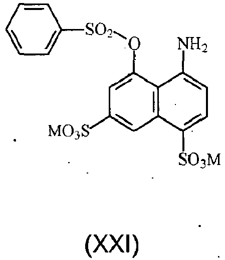 worin M für ein Wasserstoffatom steht, wurde aus 0.5 Mol 1-Amino-8-naphthol-4,6-disulfonsäure und 0.6 Mol Benzolsulfonylchlorid nach dem in der Patentanmeldung EP 1'693'422 im Beispiel 2-1 angegebenen Verfahren hergestellt.

### Diazosuspension A

46 g (0.1 Mol) der Verbindung der Formel (XXI) wurden bei Raumtemperatur in 360 ml Wasser suspendiert, auf eine Temperatur zwischen 0° C und 5° C abgekühlt und bei dieser Temperatur wurde unter Rühren während 10 Minuten 25 ml einer wässrigen Salzsäurelösung (37 %) zugetropft. Dann wurden bei einer Temperatur zwischen 0° C und 10° C 25 ml einer wässrigen Natriumnitritlösung (4N) zugetropft. Nach beendeter Zugabe wurde 1 Stunde bei einer Temperatur zwischen 0° C und 5° C nachgerührt. Die im Überschuss vorhandene salpetrige Säure wurde anschliessend durch Reaktion mit Sulfaminsäure entfernt.

### Herstellung des intermediären Farbstoffs der Formel (XXII)

Bei einer Innentemperatur zwischen 5° C und 10° C wurde zur Suspension von 34.7 g (0.1 Mol) 1-Amino-8-naphthol-4,6-disulfonsäure (92 %) in 100 ml Wasser unter Rühren während 30 Minuten die Diazosuspension A zugegeben und der pH-Wert durch gleichzeitiges Zudosieren von Natronlauge (20 %) zwischen 2.0 und 3.0 gehalten. Nach beendeter Zugabe wurde 2 Stunden bei einer Temperatur zwischen 0° C und 5°C weitergerührt.

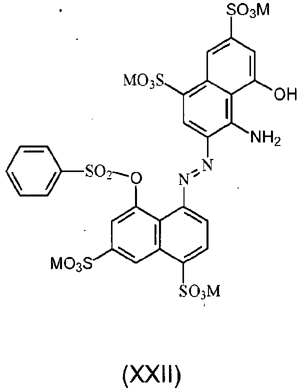

### Diazosuspension B

50.6 g (0.12 Mol) des Natriumsalzes der 2-Amino-5-nitrobenzolsulfonsäure (57 %) wurden in 350 ml Wasser aufgelöst. Die resultierende Lösung wurde auf eine Temperatur zwischen 0° C und 5° C abgekühlt und es wurden 30 ml einer wässrigen Lösung (4 N) von Natriumnitrit zugegeben. Bei einer Temperatur zwischen 0° C und 10°C wurde unter Rühren während 10 Minuten 50 ml einer wässrigen Salzsäurelösung (37 %) zugetropft. Dann wurde 1 Stunde bei dieser Temperatur weitergerührt. Die im Überschuss vorhandene salpetrige Säure wurde anschliessend durch Reaktion mit Sulfaminsäure entfernt.

### Herstellung des Farbstoffs der Formel (XXIII)

Der intermediäre Farbstoff der Formel (XXII) wurde nicht isoliert und direkt weiter mit der Diazoverbindung B umgesetzt.

Bei einer Innentemperatur zwischen 5° C und 10° C wurde zur Suspension des intermediären Farbstoffs der Formel (XXIX) unter Rühren während 30 Minuten die Diazosuspension B zugegeben und der pH-Wert durch Zudosieren von Natronlauge (20 %) zwischen 5.0 und 7.0 gehalten. Nach beendeter Zugabe wurde 2 Stunden bei einer Temperatur zwischen 0° C und 5°C und 2 Stunden bei Raumtemperatur weitergerührt. Der intermediäre Farbstoff der Formel (XXVI) wurde nicht isoliert und direkt mit Natronlauge bei einer Temperatur von 90° C und einem pH-Wert zwischen 11.0 und 12.0 hydrolysiert. Nach beendeter Hydrolyse wurde der pH-Wert mit Essigsäure auf 7.0 abgesenkt und der ausgefallene Farbstoff abgenutscht. Der Rohfarbstoff wurde mit 300 ml einer wässrigen Lösung (60 %) von Ethanol gereinigt. Nach Trocknung des Farbstoffs erhielt man 39.2 g des Farbstoffs der Formel (XXIII).

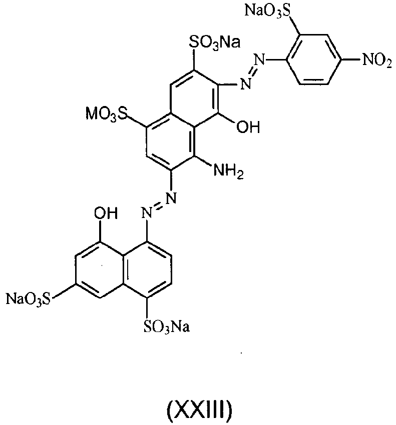

### Herstellung des Trisazofarbstoffs (10)

Zu einem homogenen Gemisch von 9.9 g (10 mMol) des Farbstoffs der Formel (XXIII) in 150 ml einer Mischung von Wasser und N-Methylpyrrolidon (2 : 1) bei einer Innentemperatur zwischen 0° C und 5° C wurden während 30 Minuten 15 mMol der Diazosuspension B zugegeben und der pH-Wert durch gleichzeitiges Zudosieren von Natronlauge (20 %) zwischen 5.0 und 7.0 gehalten. Nach beendeter Zugabe wurde 2 Stunden bei einer Temperatur zwischen 0° C und 5° C und 2 Stunden bei Raumtemperatur weitergerührt. Dann wurde die dunkle Lösung klarfiltriert und das Filtrat am Rotavapor aufkonzentriert. Der Farbstoff wurde dann durch Zugabe von Methanol ausgefällt und abfiltriert.. Der Rohfarbstoff wurde mit 60 ml einer wässrigen Lösung (80 %) von Ethanol gereinigt. Nach Trocknung erhielt man 10 g des Triazofarbstoffs 10 in Form seines Natriumsalzes.

Auf ähnliche Art und Weise können durch die Wahl geeigneter Ausgangsmaterialien die erfindungsgemässen Trisazofarbstoffe 11 bis 26 hergestellt werden.

Die Trisazofarbstoffe (31) bis (34) können nach dem Verfahren hergestellt werden, das in der Patentanmeldung EP 10187827.0 beschrieben worden ist.

### Herstellungsbeispiel für Tinten

Die vorliegende Erfindung wird, soweit sie sich auf Tinten bezieht, durch die folgenden Beispiele beschrieben, in denen erfindungsgemässe Trisazofarbstoffe aus der Tabelle 1 und Trisazofarbstoffe des Standes der Technik eingesetzt werden. 100 g jeder Tinte wurden hergestellt, indem die benötigte Menge Farbstoff (2 - 9 g), Glycerin (5 g), Ethylenglykol (5 g), Tergitol 15-S-7 (erhältlich bei Union Carbide Co., Houston, USA) (0.5 g) und eine Biocid-Lösung (Mergal K 10N, erhältlich bei Riedel-de-Haën, Seelze, Deutschland) (0.2 g) zusammen mit Wasser etwa 1 Stunde unter Rühren auf eine Temperatur von 50° C erwärmt wurden. Die erhaltene Lösung wurde auf eine Temperatur von 20° C abgekühlt und ihr pH-Wert auf 7.5 eingestellt. Anschliessend wurde die Lösung durch ein Millipore^{®}-Filter mit 0.5 µm Porendurchmesser abfiltriert. Die Farbstoffmenge wurde so gewählt, dass die optische Dichte des bedruckten Bildes für alle Farbstoffe möglichst gleich war.

### Anwendungsbeispiele von Tinten

Die hergestellten Tinten wurden anschliessend mit Hilfe eines Tintenstrahldruckers des Typs Pixma iP4000 von Canon auf die folgenden Aufnahmematerialen aufgebracht
1) ILFORD Premium Plus Instant Dry Glossy Photo RC Paper (nanoporöses Aufzeichnungsmaterial auf Basis von Siliziumdioxid, erhältlich bei ILFORD Imaging Switzerland GmbH, Freiburg, Schweiz)
   und
2) ILFORD Galerie Smooth Gloss Paper (nanoporöses Aufzeichnungsmaterial auf Basis von Aluminiumoxid/hydroxid, erhältlich bei ILFORD Imaging Switzerland GmbH, Freiburg, Schweiz)

### Prüfungen

### (A) Lichtechtheit

Die bedruckten Muster werden in einem Weather-Ometer® Ci35A (erhältlich bei Atlas Material Testing Technology, Chicago, USA) mit einer 6500 W Xenon Lampe bei einer Temperatur von 20° C and einer relativen Luftfeuchtigkeit von 50 % so lange bestrahlt, bis 20 Megaluxstunden erreicht wurden. Der Dichteverlust wurde mit einem Spektrophotometer Spectrolino^{®} gemessen. Der prozentuale Dichteverlust ausgehend von der ursprünglichen Dichte ist ein Mass für die Lichtechtheit der Farbstoffe auf dem bedruckten Aufzeichnungsmaterial.

### (B) Farbkoordinaten

Die L*a*b*-Werte wurden auf bedruckten Mustern mit Hilfe eines Spektrometers Gretag SPM 100, erhältlich bei Gretag AG, Regensdorf, Schweiz, gemessen.

### (C) Ozonbeständigkeit

Quadratische Farbfelder mit einer Fläche von 1 cm² wurden auf die beiden Aufzeichnungsmaterialien gedruckt. Die bedruckten Muster werden 24 Stunden bei einer relativen Luftfeuchtigkeit von etwa 60 % getrocknet. Darauf werden an den bedruckten Mustern die optische Dichte der quadratischen Farbfelder mit einem Densitometer Spectrolino^{®} der Firma Gretag Macbeth, Regensdorf, Schweiz gemessen. Anschliessend werden die bedruckten Muster in einer Ozonkammer, Modell 903, der Firma Satra/Hampden, Grossbritannien, bei einer Temperatur von 30° C, einer relativen Luftfeuchtigkeit von 50 % und einer Ozonkonzentration von 1 ppm bei einer Geschwindigkeit der zirkulierenden, ozonhaltigen Luft von 13 mm/s während einer bestimmten Zeit gelagert. Nach abgeschlossener Lagerung werden die Muster erneut ausgemessen. Die Dichteunterschiede in Prozenten vor und nach der Lagerung sind ein Mass für das Ausmass des Farbstoffverlustes durch die Einwirkung des Ozons.

### Ergebnisse

Die Dichteverluste bei einer Bestrahlung mit 20 Megaluxstunden sind in Tabelle 2 zusammengestellt.

**Tabelle 2**

| Farbstoff Nr. | Prozentualer Dichteverlust Aufzeichnungsmaterial 1 | Prozentualer Dichteverlust Aufzeichnungsmaterial 2 |
|---|---|---|
| 10 | 8.7 | 18.8 |
| 11 | 7.2 | 24.3 |
| 12 | 13.1 | 25.0 |
| 13 | 7.2 | 24.3 |
| 14 | 13.0 | 32.8 |
| 15 | 15.9 | 35.6 |
| 16 | 7.9 | 26.8 |
| 17 | 16.3 | 39.2 |
| 18 | 15.1 | 29.7 |
| 19 | 17.8 | 39.4 |
| 20 | 13.3 | 31.9 |
| 21 | 17.0 | 35.6 |
| 31 | 15.7 | 30.5 |
| (I) | 19.7 | 34.0 |
| (II) | 39.4 | 62.0 |

Ein Vergleich der gemessenen Farbstoffverluste von bedruckten Mustern in Tabelle 2 zeigt klar, dass die erfindungsgemässen Trisazoschwarzfarbstoffe im Vergleich zu den Trisazoschwarzfarbstoffen (I) und (II) des Standes der Technik eine wesentlich besser Lichtbeständigkeiten zeigen. Das heisst, dass im Tintenstrahldruck hergestellte schwarze Abbildungen mit den erfindungsgemässen Trisazoschwarzfarbstoffen auch unter Lichteinfluss viel weniger verblassen als schwarze Bilder, welche die bisher bekannten Trisazoschwarzfarbstoffe des Standes der Technik enthalten.

Die L*a*b*-Werte (Lichtart D₆₅) sind in Tabelle 3 für die erfindungsgemässen und für die Trisazoschwarzfarbstoffe (I) und (II) des Standes der Technik zusammengestellt.

**Tabelle 3**

| Farbstoff Nr. | L*a*b*-Wert Aufzeichnungsmaterial 1 | L*a*b*-Wert Aufzeichnungsmaterial 2 |
|---|---|---|
| 10 | 15.4 / 4.5 / -1.9 | 11.9 / 4.9 / -2.3 |
| 11 | 7.8 / 5.7 / -7.4 | 7.2 / 4.5 / -8.0 |
| 12 | 10.8 / 6.4 / -9.6 | 9.8 / 11.9 / -3.0 |
| 13 | 7.8 / 5.7 / -7.4 | 7.2 / 4.5 / -8.0 |
| 14 | 6.3 / 1.6 / -5.8 | 6.3 / 1.7 / -6.2 |
| 15 | 8.9 / 2.4 / -5.6 | 7.8 / 2.8 / -6.9 |
| 16 | 8.1 / 3.4 / -5.8 | 8.6 / 3.4 / -7.1 |
| 17 | 17.0 / 10.8 / -6.5 | 8.2 / 7.4 / -7.7 |
| 18 | 10.2 / 4.7 / -6.6 | 8.3 / 4.6 / -8.1 |
| 19 | 7.5 / 3.6 / -8.3 | 7.3 / 2.3 / -7.3 |
| 20 | 9.3 / 6.3 / -7.7 | 8.0 / 5.5 / -8.1 |
| 21 | 12.0 / 6.5 / -6.5 | 10.6 / 5.6 / -7.3 |
| 31 | 10.4 / 6.4 / -5.7 | 9.6 / 5.4 / -6.0 |
| 33 | 13.7 / 5.1 / -4.8 | |
| (I) | 9.1 / 9.2 / -21.5 | 8.6 / 7.8 / -18.1 |
| (II) | 18.9 / 4.3 / -31.7 | 21.0 / 11.4 / -27.0 |

Ein Vergleich der gemessenen L*a*b*-Werte in Tabelle 3, in denen die Tinten die erfindungsgemässen Trisazofarbstoffe aus Tabelle 1 enthalten, zeigt klar, dass Bildstellen mit den Tinten, welche die erfindungsgemässen Trisazofarbstoffen enthalten, kleinere b*-Werte aufweisen als Bildstellen mit den Tinten, welche die Trisazofarbstoffe (I) und (II) des Standes der Technik enthalten. Die erfindungsgemässen schwarzen Trisazofarbstoffe sind deshalb im Tintenstrahldruckverfahren besonderst geeignet, weil sie eine neutralere Schwarzwiedergaben ermöglichen.

Die bestimmten Werte für die Farbstoffverluste bei einem Tintenauftrag von 80 % durch die Ozoneinwirkung auf den Aufzeichnungsmaterialen 1) und 2) nach 96 Stunden Exposition an ozonhaltiger Luft sind in Tabelle 4 aufgeführt.

**Tabelle 4**

| Farbstoff Nr. | Prozentualer Dichteverlust Aufzeichnungsmaterial 1 | Prozentualer Dichteverlust Aufzeichnungsmaterial 2 |
|---|---|---|
| 10 | 13.9 | 23.8 |
| 11 | 11.4 | 17.3 |
| 12 | 32.0 | 48.3 |
| 13 | 13.8 | 25.0 |
| 14 | 15.0 | 28.2 |
| 15 | 18.3 | 31.5 |
| 16 | 13.6 | 22.7 |
| 17 | 20.7 | 34.5 |
| 18 | 18.0 | 31.3 |
| 19 | 18.7 | 26.4 |
| 20 | 13.3 | 31.9 |
| 21 | 35.2 | 43.8 |
| 31 | 28.4 | 34.0 |
| (I) | 14.2 | 17.1 |
| (II) | 48.5 | 48.2 |

Ein Vergleich der gemessenen Ozonbeständigkeiten in Tabelle 4, in denen die Tinten die erfindungsgemässen Trisazofarbstoffe aus Tabelle 2 enthalten, zeigt klar, dass die erfindungsgemässen Trisazofarbstoffe eine bessere Ozonbeständigkeit haben als der Trisazofarbstoff (II) des Standes der Technik.

## Patentansprüche

1. Trisazofarbstoffe der allgemeinen Formel (IV) 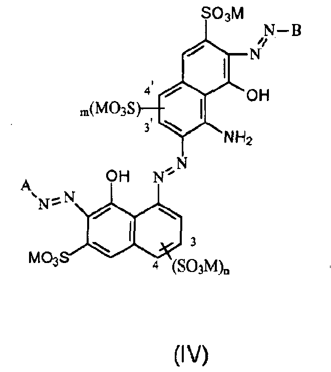 und der allgemeinen Formel (V) 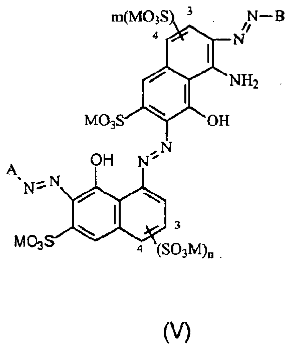 worin
M für ein Wasserstoffatom, ein Metallkation oder ein Ammoniumkation, welches gegebenenfalls eine oder mehrere unsubstituierte oder substituierte Alkylreste oder Hydroxyalkoxylalkylreste mit jeweils 1 bis 18 Kohlenstoffatomen aufweist, steht;
m, n unabhängig voneinander den Wert 0 oder 1 annehmen;
A entweder für einen Rest der allgemeinen Formel (VI) 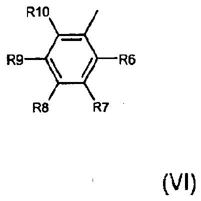 worin
R₆, R₇, R₈, R₉, R₁₀ unabhängig voneinander für ein Wasserstoffatom, eine SO₃M-Gruppe, eine NO₂-Gruppe, eine COOM-Gruppe, eine CN-Gruppe, ein Halogenatom, einen Esterrest, einen Alkylrest oder Alkoxylrest mit je 1 bis 6 Kohlenstoffatomen, für einen unsubstituierten oder substituierten Amidrest oder Sulfonamidrest mit je bis zu 12 Kohlenstoffatomen, wobei die Substituenten aus der Gruppe bestehend aus COOM, OH, OCH₃, NH₂, Cl, COOCH₃ und COOCH₂CH₃ ausgewählt werden, stehen;
oder für einen Rest der allgemeinen Formel (VII) 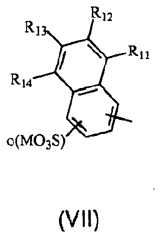 worin
o den Wert 0 oder 1 annimmt
und R₁₁, R₁₂, R₁₃, R₁₄ unabhängig voneinander für ein Wasserstoffatom, eine SO₃M-Gruppe, eine NO₂-Gruppe, eine COOM-Gruppe, ein Halogenatom, einen Esterrest, einen Alkoxylrest mit 1 bis 6 Kohlenstoffatomen, für einen unsubstituierten oder substituierten Amidrest oder Sulfonamid-Rest mit je bis zu 12 Kohlenstoffatomen, wobei die Substituenten aus der Gruppe bestehend aus COOM, OH, OCH₃, NH₂, Cl, COOCH₃ und COOCH₂CH₃ ausgewählt werden, stehen
und
B entweder für einen Rest der allgemeinen Formel (VIII) 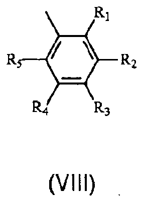 worin
R₁, R₂, R₃, R₄, R5 unabhängig voneinander für ein Wasserstoffatom, eine SO₃M-Gruppe, eine NO₂-Gruppe, eine COOM-Gruppe, eine CN-Gruppe, ein Halogenatom, einen Esterrest, einen Alkylrest oder Alkoxylrest mit je 1 bis 6 Kohlenstoffatomen, für einen unsubstituierten oder substituierten Amidrest oder Sulfonamidrest mit je bis zu 12 Kohlenstoffatomen, wobei die Substituenten aus der Gruppe bestehend aus COOM, OH, OCH₃, NH₂, Cl, COOCH₃ und COOCH₂CH₃ ausgewählt werden, stehen;
oder für einen Rest der allgemeinen Formel (IX) 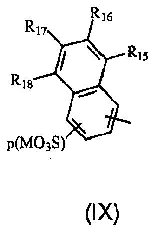 worin
p den Wert 0 oder 1 annimmt
und
R₁₅, R₁₆, R₁₇, R₁₈ unabhängig voneinander für ein Wasserstoffatom, eine SO₃M-Gruppe, eine NO₂-Gruppe, eine COOM-Gruppe, ein Halogenatom, einen Esterrest, einen Alkoxylrest mit 1 bis 6 Kohlenstoffatomen, für einen unsubstituierten oder substituierten Amidrest oder Sulfonamid-Rest mit je bis zu 12 Kohlenstoffatomen, wobei die Substituenten aus der Gruppe bestehend aus COOM, OH, OCH₃, NH₂, Cl, COOCH₃ und COOCH₂CH₃ ausgewählt werden, stehen.

2. Trisazofarbstoffe der allgemeinen Formeln (IV) und (V) gemäss Anspruch 1, **dadurch gekennzeichnet, dass**
M, o und p die gleiche Bedeutung wie in Anspruch 1 haben,
R₁, R₂, R₃, R₄, R₅ unabhängig voneinander für ein Wasserstoffatom, eine SO₃M-Gruppe, eine NO₂-Gruppe, eine COOM-Gruppe, eine CN-Gruppe, ein Halogenatom, einen Esterrest, einen Alkylrest oder Alkoxylrest mit je 1 bis 6 Kohlenstoffatomen stehen;
R₆, R₇, R₈, R₉, R₁₀ unabhängig voneinander für ein Wasserstoffatom, eine SO₃M-Gruppe eine NO₂-Gruppe eine COOM-Gruppe, eine CN-Gruppe, ein Halogenatom, einen Esterrest, einen Alkylrest oder Alkoxylrest mit je 1 bis 6 Kohlenstoffatomen stehen;
R₁₁, R₁₂, R₁₃, R₁₄ unabhängig voneinander für ein Wasserstoffatom, ein Halogenatom, eine SO₃M-Gruppe oder eine COOM-Gruppe stehen;
R₁₅, R₁₆, R₁₇, R₁₈ unabhängig voneinander für ein Wasserstoffatom, ein Halogenatom, eine SO₃M-Gruppe oder eine COOM-Gruppe stehen;
und
m, n je den Wert 1 annehmen

3. Trisazofarbstoffe der allgemeinen Formeln (IV) und (V) gemäss Anspruch 1, **dadurch gekennzeichnet, dass**
R₁, R₂, R₃, R₄, R₅, R₆, R₇, R₈, R₉, R₁₀, R₁₁, R₁₂, R₁₃, R₁₄, R₁₅, R₁₆, R₁₇, R₁₈, M, o und p die gleiche Bedeutung wie in Anspruch 1 haben;
m, n je den Wert 1 annehmen
und
die Sulfonsäuregruppen in den Positionen 4 und 4' stehen.

4. Trisazofarbstoffe der allgemeinen Formeln (IV) und (V) gemäss Anspruch 1, **dadurch gekennzeichnet, dass**
M, o und p die gleiche Bedeutung wie in Anspruch 1 haben;
R₁, R₂, R₃, R₄, R₅, R₆, R₇, R₈, R₉, R₁₀, R₁₁, R₁₂, R₁₃, R₁₄, R₁₅, R₁₆, R₁₇ und R₁₈ die gleiche Bedeutung wie in Anspruch 2 haben;
m, n je den Wert 1 annehmen
und
die Sulfonsäuregruppen in den Positionen 4 und 4' stehen.

5. Trisazofarbstoffe der allgemeinen Formeln (IV) und (V) gemäss den Ansprüchen 1 bis 4, **dadurch gekennzeichnet, dass**
A ein Rest der allgemeinen Formel (VII) ist und B ein Rest der allgemeinen Formel (IX).

6. Trisazofarbstoffe der allgemeinen Formeln (IV) und (V) gemäss gemäss den Ansprüchen 1 bis 5, **dadurch gekennzeichnet, dass**
die Substituenten A und B identisch sind.

7. Verfahren zur Herstellung der erfindungsgemässen Trisazofarbstoffe der allgemeinen Formel (IV) gemäss Anspruch 1, **dadurch gekennzeichnet, dass**
ein Amin der allgemeinen Formel (X), 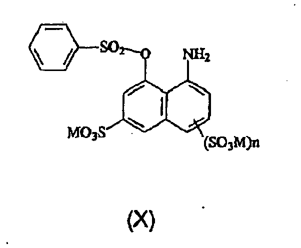 worin n und M die gleiche Bedeutung wie in Anspruch 1 haben,
diazotiert und anschliessend mit einer Verbindung der allgemeinen Formel (XI), 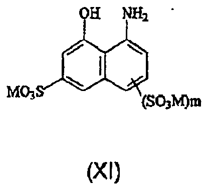 worin m und M die gleiche Bedeutung wie in Anspruch 1 haben,
bei einem sauren pH-Wert zwischen etwa 1.0 und 3.0 gekuppelt wird, dass der intermediäre Farbstoff der allgemeinen Formel (XII) gebildet wird, 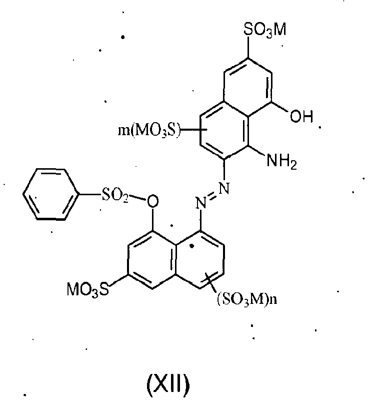 der intermediäre Farbstoff der allgemeinen Formel (XII) weiter mit einer Diazoverbindung der allgemeinen Formel (XIII) 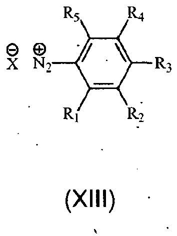 worin R₁, R₂, R₃, R₄ und R₅ die gleiche Bedeutung wie in Anspruch 1 haben und X das Anion der bei der Diazotierung verwendeten Säure ist,
oder der allgemeinen Formel (XIV) 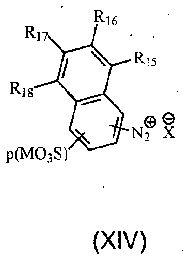 worin R₁₅, R₁₆, R₁₇, R₁₈ und p die gleiche Bedeutung wie in Anspruch 1 haben und X das Anion der bei der Diazotierung verwendeten Säure ist,
bei einem leicht basischen pH-Wert zwischen etwa 7.0 und 9.0 gekuppelt und anschliessend basisch hydrolisiert wird unter Bildung der intermediären Farbstoffe der allgemeinen Formel (XV) 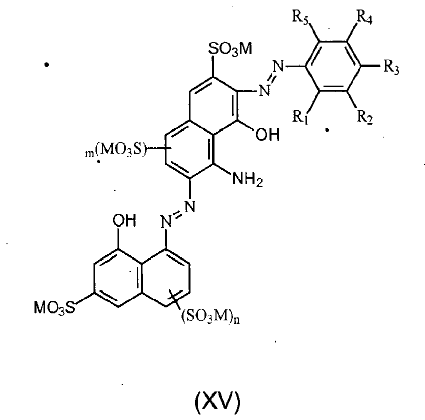 oder der allgemeinen Formel (XVI) 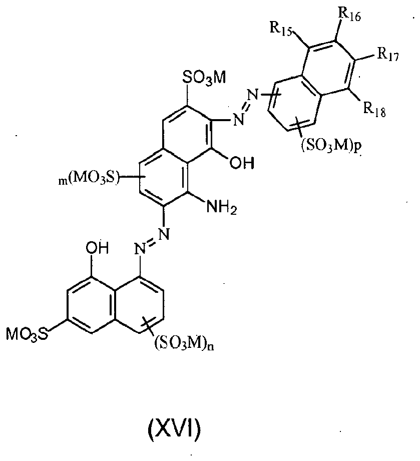 welche dann weiter mit einer Diazoverbindung der allgemeinen Formel (XVII) 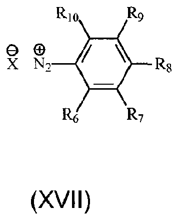 worin R₆, R₇, R₈, Rg und R₁₀ die gleiche Bedeutung wie in Anspruch 1 haben und X das Anion der bei der Diazotierung verwendeten Säure ist,
oder der allgemeinen Formel (XVIII) 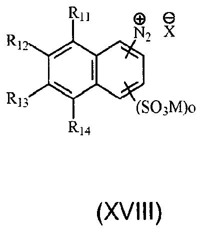 worin o, R₁₁, R₁₂, R₁₃ und R₁₄ die gleiche Bedeutung wie vorher angegeben haben und X das Anion der bei der Diazotierung verwendeten Säure ist,
bei einem etwa neutralen pH-Wert zwischen etwa 5.0 und 9.0 gekuppelt wird.

8. Verfahren zur Herstellung der erfindungsgemässen Trisazofarbstoffe der allgemeinen Formel (V) gemäss Anspruch 1, **dadurch gekennzeichnet, dass**
ein Amin der allgemeinen Formel (XIX) 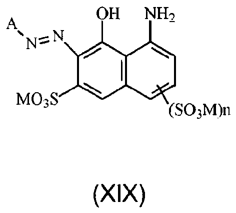 worin M, A und n die gleiche Bedeutung wie in Anspruch 1 haben, diazotiert und anschliessend mit einer Verbindung der allgemeinen Formel (XX) 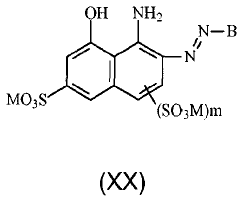 worin M, B und m die gleiche Bedeutung wie in Anspruch 1 haben,
bei einem leicht basischen pH-Wert zwischen etwa 7.0 und 9.0 gekuppelt wird.

9. Verwendung der Trisazofarbstoffe nach einem oder mehreren der Ansprüche 1 bis 6 zum Aufzeichnen von Schrift und Bildern auf einem Aufzeichnungsmaterial, beschichtetem oder unbeschichtetem Papier, zum Färben und Bedrucken von natürlichen oder synthetischen Fasermaterialen, nanoporösen Aufzeichnungsmaterialien, Leder und Aluminium.

10. Flüssige Farbstoffpräparationen, welche mindestens einen Trisazofarbstoff oder eine Mischung von Trisazofarbstoffen nach einem oder mehreren der Ansprüche 1 bis 6 enthalten.

11. Tinten für den Tintenstrahldruck und für Schreibutensilien, welche mindestens einen Trisazofarbstoff oder eine Mischung von Trisazofarbstoffen nach einem oder mehreren der Ansprüche 1 bis 6 enthalten.

12. Tinten für den Tintenstrahldruck und für Schreibutensilien, welche neben mindestens einem Trisazofarbstoff oder einer Mischung von Trisazofarbstoffen nach einem oder mehreren der Ansprüche 1 bis 6, einen oder mehrere weitere Farbstoffe enthalten

## Claims

1. Trisazo dyes of the general formula (IV) 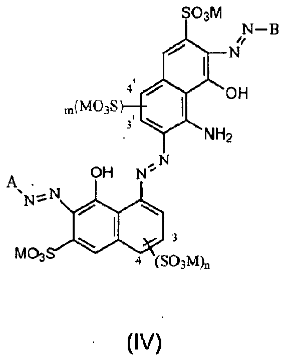 and of the general formula (V) 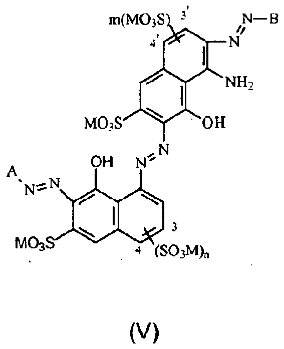 wherein
M represents a hydrogen atom, a metal cation or an ammonium cation, which optionally has one or more unsubstituted or substituted alkyl radicals or hydroxyalkoxyalkyl radicals having in each case 1 to 18 carbon atoms;
m, n independently of each other assume the value 0 or 1;
A either represents a radical of the general formula (VI) 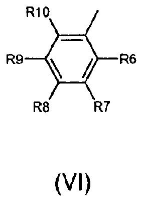 wherein
R₆, R₇, R₈, R₉, R₁₀ independently of each other represent a hydrogen atom, an SO₃M group, an NO₂ group, a COOM group, a CN group, a halogen atom, an ester radical, an alkyl radical or alkoxy radical each having 1 to 6 carbon atoms, an unsubstituted or substituted amide radical or sulphonamide radical each having up to 12 carbon atoms, the substituents being chosen from the group consisting of COOM, OH, OCH₃, NH₂, Cl, COOCH₃ and COOCH₂CH₃;
or represents a radical of the general formula (VII) 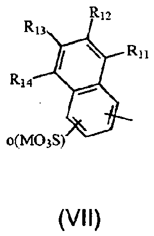 wherein
o assumes the value 0 or 1
and R₁₁, R₁₂, R₁₃, R₁₄ independently of each other represent a hydrogen atom, an SO₃M group, an NO₂ group, a COOM group, a halogen atom, an ester radical, an alkoxy radical having 1 to 6 carbon atoms, an unsubstituted or substituted amide radical or sulphonamide radical each having up to 12 carbon atoms, the substituents being chosen from the group consisting of COOM, OH, OCH₃, NH₂, Cl, COOCH₃ and COOCH₂CH₃, and
B either represents a radical of the general formula (VIII) 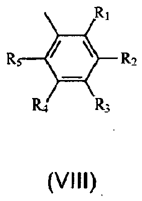 wherein
R₁, R₂, R₃, R₄, R₅ independently of each other represent a hydrogen atom, an SO₃M group, an NO₂ group, a COOM group, a CN group, a halogen atom, an ester radical, an alkyl radical or alkoxy radical each having 1 to 6 carbon atoms, an unsubstituted or substituted amide radical or sulphonamide radical each having up to 12 carbon atoms, the substituents being chosen from the group consisting of COOM, OH, OCH₃, NH₂, Cl, COOCH₃ and COOCH₂CH₃;
or represents a radical of the general formula (IX) 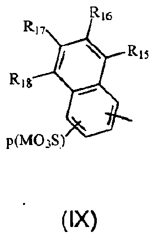 wherein
p assumes the value 0 or 1
and R₁₅, R₁₆, R₁₇, R₁₈ independently of each other represent a hydrogen atom, an SO₃M group, an NO₂ group, a COOM group, a halogen atom, an ester radical, an alkoxy radical having 1 to 6 carbon atoms, an unsubstituted or substituted amide radical or sulphonamide radical each having up to 12 carbon atoms, the substituents being chosen from the group consisting of COOM, OH, OCH₃, NH₂, Cl, COOCH₃ and COOCH₂CH₃.

2. Trisazo dyes of the general formulae (IV) and (V) according to claim 1, **characterized in that**
M, o and p have the same meaning as in claim 1,
R₁, R₂, R₃, R₄, R₅ independently of each other represent a hydrogen atom, an SO₃M group, an NO₂ group, a COOM group, a CN group, a halogen atom, an ester radical, an alkyl radical or alkoxy radical each having 1 to 6 carbon atoms;
R₆, R₇, R₈, R₉, R₁₀ independently of each other represent a hydrogen atom, an SO₃M group, an NO₂ group, a COOM group, a CN group, a halogen atom, an ester radical, an alkyl radical or alkoxy radical each having 1 to 6 carbon atoms;
R₁₁, R₁₂, R₁₃, R₁₄ independently of each other represent a hydrogen atom, a halogen atom, an SO₃M group or a COOM group;
R₁₅, R₁₆, R₁₇, R₁₈ independently of each other represent a hydrogen atom, a halogen atom, an SO₃M group or a COOM group;
and
m, n each assume the value 1.

3. Trisazo dyes of the general formulae (IV) and (V) according to claim 1, **characterized in that**
R₁, R₂, R₃, R₄, R₅, R₆, R₇, R₈, R₉, R₁₀, R₁₁, R₁₂, R₁₃, R₁₄, R₁₅, R₁₆, R₁₇, R₁₈, M, o and p have the same meaning as in claim 1;
m, n each assume the value 1
and
the sulphonic acid groups are in positions 4 and 4'.

4. Trisazo dyes of the general formulae (IV) and (V) according to claim 1, **characterized in that**
M, o and p have the same meaning as in claim 1;
R₁, R₂, R₃, R₄, R₅, R₆, R₇, R₈, R₉, R₁₀, R₁₁, R₁₂, R₁₃, R₁₄, R₁₅, R₁₆, R₁₇ and R₁₈ have the same meaning as in claim 2;
m, n each assume the value 1
and
the sulphonic acid groups are in positions 4 and 4'.

5. Trisazo dyes of the general formulae (IV) and (V) according to claims 1 to 4,
**characterized in that**
A is a radical of the general formula (VII) and B is a radical of the general formula (IX).

6. Trisazo dyes of the general formulae (IV) and (V) according to claims 1 to 5,
**characterized in that**
the substituents A and B are identical.

7. Process for the preparation of the trisazo dyes of the general formula (IV) according to the invention according to claim 1, **characterized in that**
an amine of the general formula (X) 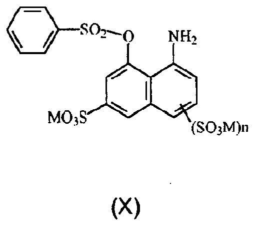 wherein n and M have the same meaning as in claim 1,
is diazotized and the diazotization product is then coupled with a compound of the general formula (XI) 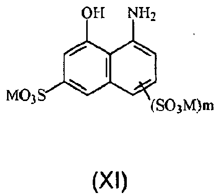 wherein m and M have the same meaning as in claim 1,
at an acid pH of between about 1.0 and 3.0, **in that** the intermediate dye of the general formula (XII) is formed 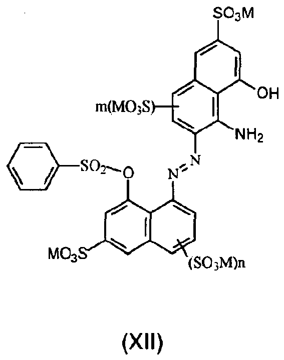 the intermediate dye of the general formula (XII) is coupled further with a diazo compound of the general formula (XIII) 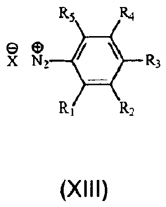 wherein R₁, R₂, R₃, R₄ and R₅ have the same meaning as in claim 1 and X is the anion of the acid used in the diazotization,
or of the general formula (XIV) 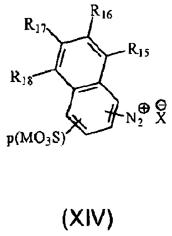 wherein R₁₅, R₁₆, R₁₇, R₁₈ and p have the same meaning as in claim 1 and X is the anion of the acid used in the diazotization,
at a slightly basic pH of between about 7.0 and 9.0 and the coupling product is then subjected to hydrolysis under basic conditions, to form the intermediate dyes of the general formula (XV) 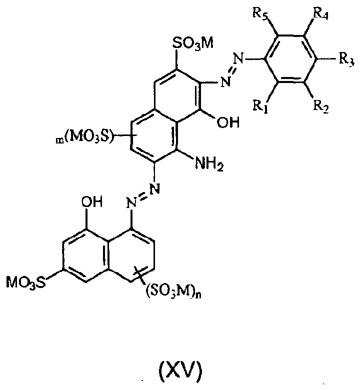 or of the general formula (XVI) 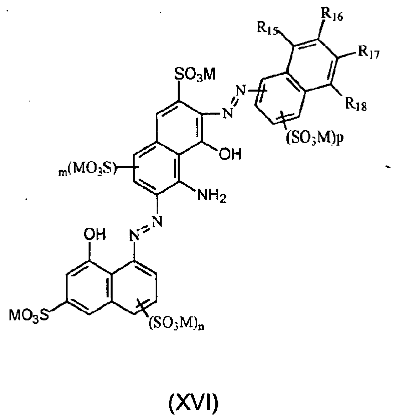 which are then coupled further with a diazo compound of the general formula (XVII) 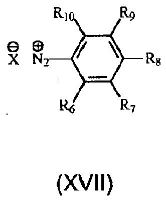 wherein R₆, R₇, R₈, R₉ and R₁₀ have the same meaning as in claim 1 and X is the anion of the acid used in the diazotization,
or of the general formula (XVIII) 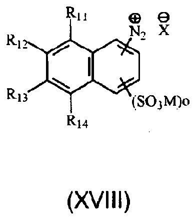 wherein o, R₁₁, R₁₂, R₁₃ and R₁₄ have the same meaning as given above and X is the anion of the acid used in the diazotization,
at an approximately neutral pH of between about 5.0 and 9.0.

8. Process for the preparation of the trisazo dyestuffs of the general formula (V) according to the invention according to claim 1, **characterized in that**
an amine of the general formula (XIX) 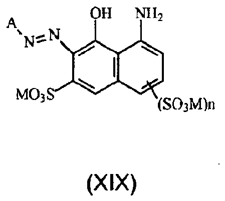 wherein M, A and n have the same meaning as in claim 1,
is diazotized and the diazotization product is then coupled with a compound of the general formula (XX) 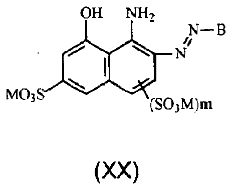 wherein M, B and m have the same meaning as in claim 1,
at a slightly basic pH of between about 7.0 and 9.0.

9. Use of the trisazo dyes according to one or more of claims 1 to 6 for recording script and images on a recording material, coated or non-coated paper, for dyeing and printing natural or synthetic fibre materials, nanoporous recording materials, leather and aluminium.

10. Liquid dye preparations which comprise at least one trisazo dye or a mixture of trisazo dyes according to one or more of claims 1 to 6.

11. Inks for inkjet printing and for writing implements, which comprise at least one trisazo dye or a mixture of trisazo dyes according to one or more of claims 1 to 6.

12. Inks for inkjet printing and for writing implements, which comprise, in addition to at least one trisazo dye or a mixture of trisazo dyes according to one or more of claims 1 to 6, one or more further dyes.

## Revendications

1. Colorants trisazoïques de formule générale (IV) 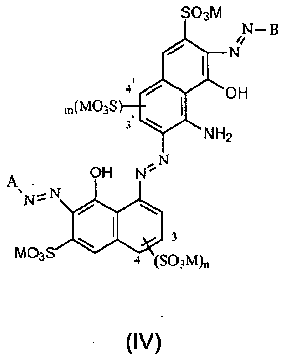 et de formule générale (V) 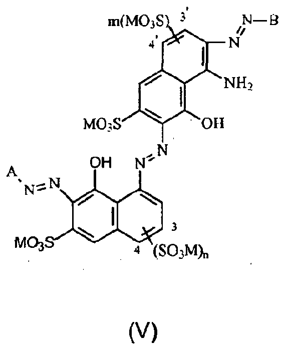 dans lesquelles
M représente un atome d'hydrogène, un cation métallique ou un cation ammonium qui présente le cas échéant un ou plusieurs radicaux alkyles ou hydroxyalcoxyalkyles non substitués ou substitués ayant respectivement 1 à 18 atomes de carbone ;
m, n prennent indépendamment l'un de l'autre la valeur 0 ou 1 ;
A représente soit un radical de formule générale (VI) 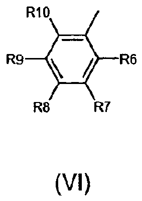 dans laquelle
R₆, R₇, R₈, R₉, R₁₀ représentent, indépendamment les uns des autres, un atome d'hydrogène, un groupe SO₃M, un groupe NO₂, un groupe COOM, un groupe CN, un atome d'halogène, un radical ester, un radical alkyle ou un radical alcoxyle, ayant respectivement 1 à 6 atomes de carbone, un radical amide ou sulfonamide non substitué ou substitué ayant respectivement jusqu'à 12 atomes de carbone, les substituants étant choisis dans le groupe constitué par COOM, OH, OCH₃, NH₂, Cl, COOCH₃ et COOCH₂CH₃ ;
soit un radical de formule générale (VII) 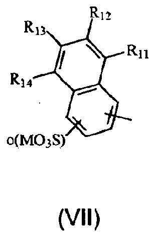 dans laquelle
o prend la valeur 0 ou 1
et
R₁₁, R₁₂, R₁₃, R₁₄ représentent, indépendamment les uns des autres, un atome d'hydrogène, un groupe SO₃M, un groupe NO₂, un groupe COOM, un atome d'halogène, un radical ester, un radical alcoxyle ayant 1 à 6 atomes de carbone, un radical amide ou sulfonamide non substitué ou substitué ayant respectivement jusqu'à 12 atomes de carbone, les substituants étant choisis dans le groupe constitué par COOM, OH, OCH₃, NH₂, Cl, COOCH₃ et COOCH₂CH₃ ;
et B représente soit un radical de formule générale (VIII) 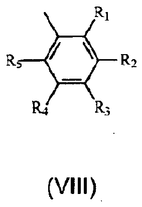
dans laquelle
R₁, R₂, R₃, R₄, R₅ représentent, indépendamment les uns des autres, un atome d'hydrogène, un groupe SO₃M, un groupe NO₂, un groupe COOM, un groupe CN, un atome d'halogène, un radical ester, un radical alkyle ou un radical alcoxyle, ayant respectivement 1 à 6 atomes de carbone, un radical amide ou sulfonamide non substitué ou substitué ayant respectivement jusqu'à 12 atomes de carbone, les substituants étant choisis dans le groupe constitué par COOM, OH, OCH₃, NH₂, Cl, COOCH₃ et COOCH₂CH₃ ;
soit un radical de formule générale (IX) 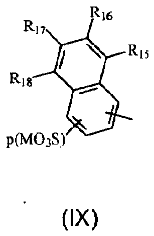 dans laquelle
p prend la valeur 0 ou 1
et
R₁₅, R₁₆, R₁₇, R₁₈ représentent, indépendamment les uns des autres, un atome d'hydrogène, un groupe SO₃M, un groupe NO₂, un groupe COOM, un atome d'halogène, un radical ester, un radical alcoxyle ayant 1 à 6 atomes de carbone, un radical amide ou sulfonamide non substitué ou substitué ayant respectivement jusqu'à 12 atomes de carbone, les substituants étant choisis dans le groupe constitué par COOM, OH, OCH₃, NH₂, Cl, COOCH₃ et COOCH₂CH₃.

2. Colorants trisazoïques de formules générales (IV) et (V) selon la revendication 1, **caractérisés en ce que**
M, o et p ont la même signification que dans la revendication 1,
R₁, R₂, R₃, R₄, R₅ représentent, indépendamment les uns des autres, un atome d'hydrogène, un groupe SO₃M, un groupe NO₂, un groupe COOM, un groupe CN, un atome d'halogène, un radical ester, un radical alkyle ou un radical alcoxyle, ayant respectivement 1 à 6 atomes de carbone ;
R₆, R₇, R₈, R₉, R₁₀ représentent, indépendamment les uns des autres, un atome d'hydrogène, un groupe SO₃M, un groupe NO₂, un groupe COOM, un groupe CN, un atome d'halogène, un radical ester, un radical alkyle ou un radical alcoxyle, ayant respectivement 1 à 6 atomes de carbone ;
R₁₁, R₁₂, R₁₃, R₁₄ représentent, indépendamment les uns des autres, un atome d'hydrogène, un atome d'halogène, un groupe SO₃M ou un groupe COOM ;
R₁₅, R₁₆, R₁₇, R₁₈ représentent, indépendamment les uns des autres, un atome d'hydrogène, un atome d'halogène, un groupe SO₃M ou un groupe COOM ;
et
m, n prennent respectivement la valeur 1.

3. Colorants trisazoïques de formules générales (IV) et (V) selon la revendication 1, **caractérisés en ce que**
R₁, R₂, R₃, R₄, R₅, R₆, R₇, R₈, R₉, R₁₀, R₁₁, R₁₂, R₁₃, R₁₄, R₁₅, R₁₆, R₁₇, R₁₈, M, o et p ont la même signification que dans la revendication 1 ;
m, n prennent respectivement la valeur 1.
et
les groupes acides sulfoniques sont en positions 4 et 4'.

4. Colorants trisazoïques de formules générales (IV) et (V) selon la revendication 1, **caractérisés en ce que**
M, o et p ont la même signification que dans la revendication 1 ;
R₁, R₂, R₃, R₄, R₅, R₆, R₇, R₈, R₉, R₁₀, R₁₁, R₁₂, R₁₃, R₁₄, R₁₅, R₁₆, R₁₇ et R₁₈, ont la même signification que dans la revendication 2 ;
m, n prennent respectivement la valeur 1.
et
les groupes acides sulfoniques sont en positions 4 et 4'.

5. Colorants trisazoïques de formules générales (IV) et (V) selon les revendications 1 à 4, **caractérisés en ce que**
A est un radical de formule générale (VII) et B est un radical de formule générale (IX).

6. Colorants trisazoïques de formules générales (IV) et (V) selon les revendications 1 à 5, **caractérisés en ce que**
les substituants A et B sont identiques.

7. Procédé de production des colorants trisazoïques selon l'invention de formule générale (IV) selon la revendication 1, **caractérisé en ce qu'**une amine de formule générale (X), 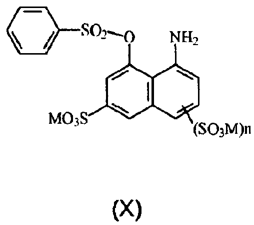 dans laquelle n et M ont la même signification que dans la revendication 1, est diazotée et couplée ensuite à un composé de formule générale (XI), 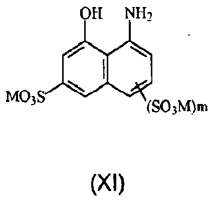 dans laquelle m et M ont la même signification que dans la revendication 1,
à un pH acide situé entre environ 1,0 et 3,0, **en ce que** le colorant intermédiaire de formule générale (XII) est formé, 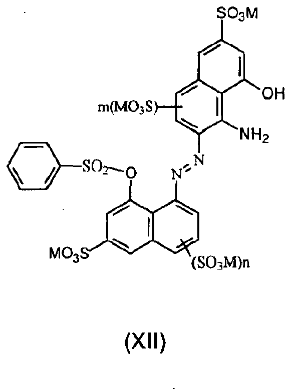 le colorant intermédiaire de formule générale (XII) est ensuite couplé à un composé diazoïque de formule générale (XIII) 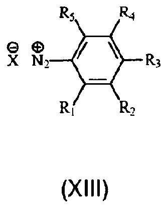 dans laquelle R₁, R₂, R₃, R₄, et R₅ ont la même signification que dans la revendication 1 et X est l'anion de l'acide utilisé lors de la diazotation,
ou de formule générale (XIV) 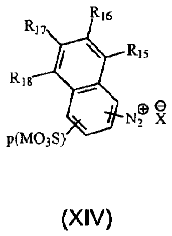 dans laquelle R₁₅, R₁₆, R₁₇, R₁₈ et p ont la même signification que dans la revendication 1 et X est l'anion de l'acide utilisé lors de la diazotation,
à un pH légèrement basique situé entre environ 7,0 et 9,0 et subit ensuite une hydrolyse basique pour former le colorant intermédiaire de formule générale (XV) 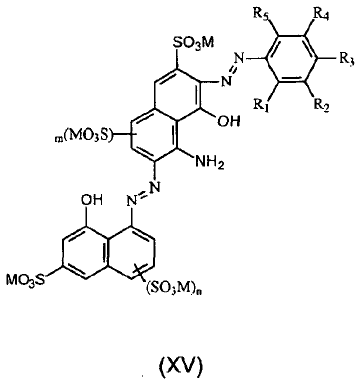 ou de formule générale (XVI) 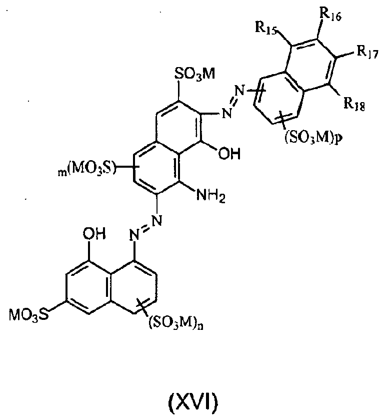 qui est alors ensuite couplé à un composé diazoïque de formule générale (XVII) 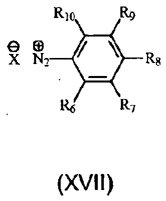 dans laquelle R₆, R₇, R₈, R₉ et R₁₀ ont la même signification que dans la revendication 1 et X est l'anion de l'acide utilisé lors de la diazotation,
ou de formule générale (XVIII) 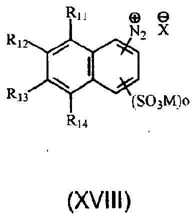 dans laquelle o, R₁₁, R₁₂, R₁₃, et R₁₄ ont la même signification que celle indiquée précédemment et X est l'anion de l'acide utilisé lors de la diazotation,
à un pH à peu près neutre, situé entre environ 5,0 et 9,0.

8. Procédé de production des colorants trisazoïques selon l'invention de formule générale (V) selon la revendication 1, **caractérisé en ce qu'**une amine de formule générale (XIX), 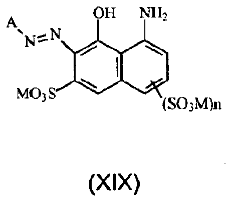 dans laquelle M, A et n ont la même signification que dans la revendication 1, est diazotée et couplée ensuite à un composé de formule générale (XX), 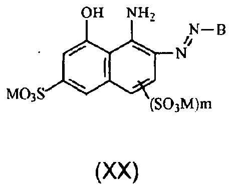 dans laquelle M, B et m ont la même signification que dans la revendication 1,
à un pH légèrement basique situé entre environ 7,0 et 9,0.

9. Utilisation des colorants trisazoïques selon une ou plusieurs des revendications 1 à 6 pour l'enregistrement d'inscriptions et d'images sur un matériau d'enregistrement, un papier couché ou non couché, pour la coloration et l'impression de matériaux en fibres naturelles ou synthétiques, de matériaux d'enregistrement nanoporeux, du cuir et de l'aluminium.

10. Préparations de colorants liquides qui comprennent au moins un colorant trisazoïque ou un mélange de colorants trisazoïques selon une ou plusieurs des revendications 1 à 6.

11. Encres pour l'impression jet d'encre et pour les stylos, qui comprennent au moins un colorant trisazoïque ou un mélange de colorants trisazoïques selon une ou plusieurs des revendications 1 à 6.

12. Encres pour l'impression jet d'encre et pour les stylos, qui comprennent, en plus d'un colorant trisazoïque ou d'un mélange de colorants trisazoïques selon une ou plusieurs des revendications 1 à 6, un ou plusieurs autres colorants.
